# EUROPEAN PATENT APPLICATION

(11) **EP 3 092 907 A1**
(43) Date of publication of application: **16.11.2016**
(21) Application number: 15734961.4
(22) Date of filing: 07.01.2015
(51) Int. Cl.: A23L 5/00, A23L 29/00, A23L 7/109, A23L 13/00, A23L 17/00

(54) **MANUFACTURING METHOD FOR IMPROVED PROTEIN-CONTAINING FOOD AND FORMULATION FOR IMPROVING PROTEIN-CONTAINING FOOD**

(30) Priority: 09.01.2014 JP 2014002719
(71) Applicant: Ajinomoto Co., Inc., Tokyo 104-8315 (JP)
(72) Inventor: SATO, Hiroaki, Kawasaki-shi Kanagawa 210-8681 (JP); NAKAGOSHI, Hiroyuki, Kawasaki-shi Kanagawa 210-8681 (JP); KOTANI, Masao, Kawasaki-shi Kanagawa 210-8681 (JP); KOBAYASHI, Yoshie, Kawasaki-shi Kanagawa 210-8681 (JP)
(74) Representative: Strehl Schübel-Hopf & Partner
(86) International application number: PCT/JP2015/050211
(87) International publication number: WO 2015/105112

(57) **Abstract**

A method for producing a modified food containing a protein and a preparation for modifying a food containing a protein are provided. A food raw material containing a protein is treated by using an oxidizing agent and/or an oxidoreductase in combination with a metal and/or a metal-containing substance to produce a food containing a protein.

## Description

### Technical Field

The present invention relates to a method for producing a modified food containing a protein and a preparation for modifying a food containing a protein.

### Background Art

Many of foods are constituted by various ingredients such as starch, proteins, saccharides, and lipids. In particular, proteins are contained in almost all foods, such as rice, wheat, egg, meat, and milk. Proteins greatly contribute to physical properties of foods, such as production suitability for food production, and mouthfeel, and therefore, decomposition, reforming, modification, polymerization, etc. of proteins constitute a part of important means for improving physical properties of foods. As techniques for improving physical properties targeting proteins, there are so far known crosslinking reaction of proteins using transglutaminase, oxidation reaction that crosslinks thiol (SH) groups of proteins to form disulfide bonds (S-S bonds), and so forth.

Patent document 1 discloses a method for producing a freeze-dried shrimp comprising immersing a shrimp in an aqueous solution containing glucose, glucose oxidase, and catalase, and then in an aqueous solution containing sodium hydrogencarbonate and/or a polyphosphoric acid salt, then subjecting the shrimp to a boiling treatment, and freeze-drying the shrimp. This patent document describes that the protein structure of the shrimp is three-dimensionally crosslinked by hydrogen peroxide generated by the glucose oxidase, and mouthfeel of fresh shrimp including both softness and firmness is obtained for shrimp to be restored with boiling water such as freeze-dried shrimp. Patent document 2 describes that extensibility, workability, and so forth of dough of baked products are improved with glucose oxidase, and also describes effects of use thereof in combination with α-amylase, ascorbic acid, and/or hemicellulase.

However, effects for modifying a food containing a protein obtainable with these techniques are still insufficient, and a method for obtaining high improvement effect in a shorter time has been desired.

Patent document 3 discloses metal-containing yeast, and many reports have been made for iron-containing yeast such as Patent documents 4 and 5. However, all of Patent documents 3 to 5 relate to health maintenance such as improvement of anemia, and they do not disclose any method for improving mouthfeel of a food containing a protein.

### Prior art references

### Patent documents

Patent document 1: Japanese Patent No. 4344294
Patent document 2: Japanese Patent No. 5290140
Patent document 3: Japanese Patent Laid-open (KOKAI) No. 2003-61618
Patent document 4: Japanese Patent Laid-open (KOKAI) No. 5-176758
Patent document 5: Japanese Patent No. 4972316

### Summary of the Invention

### Object to be Achieved by the Invention

An object of the present invention is to provide a method for producing a modified food containing a protein and a preparation for modifying a food containing a protein.

### Means for Achieving the Object

The inventors of the present invention conducted various researches, as a result, found that a food containing a protein can be efficiently modified by using an oxidoreductase such as glucose oxidase in combination with a metal-containing substance such as iron-containing yeast and iron salt, and accomplished the present invention.

The present invention can be thus embodied, for example, as follows.
(1) A method for producing a modified food containing a protein, the method comprising:
   treating a food raw material containing a protein with an oxidoreductase, and a metal and/or a metal-containing substance,
   provided that such a method wherein the oxidoreductase is a glucose oxidase, the metal and/or metal-containing substance is metal-containing yeast, and the food containing a protein is a processed aquatic food is excluded.
(2) The method according to (1), wherein the oxidoreductase consists of one or more kinds of enzymes selected from glucose oxidase, ascorbate oxidase, and phenol oxidase.
(3) The method according to (1) or (2), wherein the metal-containing substance is metal-containing yeast.
(4) The method according to (3), wherein the metal-containing yeast consists of one or more kinds of yeast selected from iron-containing yeast, chromium-containing yeast, copper-containing yeast, magnesium-containing yeast, and vanadium-containing yeast.
(5) The method according to (1) or (2), wherein the metal-containing substance is a metal salt.
(6) The method according to (5), wherein the metal salt is an iron salt.
(7) The method according to any one of (1) to (6), wherein the food containing a protein consists of one or more kinds of foods selected from a rice processed food, wheat processed food, egg processed food, meat processed food, and milk processed food.
(8) The method according to any one of (1) to (7), wherein 0.0001 to 100 U of the oxidoreductase is added per 1 g of the food raw material.
(9) The method according to any one of (3), (4), (7), and (8), wherein 0.00000025 to 0.0027 g of the metal-containing yeast in terms of dry weight is added per 1 g of the food raw material.
(10) The method according to any one of (1) to (9), which further comprises adding a substrate of the oxidoreductase.
(11) A preparation for modifying a food containing a protein, the preparation containing:
   an oxidoreductase; and
   a metal and/or a metal-containing substance,
   provided that such a preparation wherein the oxidoreductase is a glucose oxidase, the metal and/or metal-containing substance is metal-containing yeast, and the food containing a protein is a processed aquatic food is excluded.
(12) The preparation according to (11), wherein the oxidoreductase consists of one or more kinds of enzymes selected from glucose oxidase, ascorbate oxidase, and phenol oxidase.
(13) The preparation according to (11) or (12), wherein the metal-containing substance is metal-containing yeast.
(14) The preparation according to (13), wherein the metal-containing yeast consists of one or more kinds of yeast selected from iron-containing yeast, chromium-containing yeast, copper-containing yeast, magnesium-containing yeast, and vanadium-containing yeast.
(15) The preparation according to (11) or (12), wherein the metal-containing substance is a metal salt.
(16) The preparation according to (15), wherein the metal salt is an iron salt.
(17) The preparation according to any one of (11) to (16), wherein the food containing a protein consists of one or more kinds of foods selected from a rice processed food, wheat processed food, egg processed food, meat processed food, and milk processed food.
(18) The preparation according to any one of (11) to (17), which contains 0.00000005 to 0.0005 g of the metal and/or metal-containing substance in terms of metal amount per 1 U of the oxidoreductase contained in the preparation.
(19) The preparation according to any one of (13), (14), (17), and (18), which contains 0.000001 to 0.01 g of the metal-containing yeast in terms of dry weight per 1 U of the oxidoreductase contained in the preparation.
(20) The preparation according to any one of (11) to (19), which further contains a substrate of the oxidoreductase.

### Brief Description of the Drawing

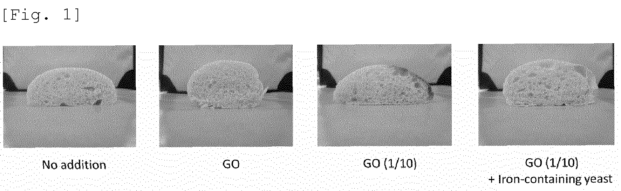

[Fig. 1] Fig. 1 shows the results of comparison of appearances of baked breads (photographs).

### Modes for Carrying out the Invention

### <1> Food containing protein

In the present invention, examples of the food containing a protein include processed foods produced from a food raw material containing a protein (henceforth also simply referred to as "food raw material"). Examples of the food raw material containing a protein include meats such as beef, pork, and chicken, fish and shellfishes (aquatic products) such as fish, shellfish, shrimp, crab, octopus, and cuttlefish, cereals such as rice and wheat, milk, egg, and so forth. Specific examples of the food containing a protein include meat processed foods such as ham, sausage, hamburger steak, and deep-fried chicken, rice processed foods such as cooked rice, rice powder bread, and rice vermicelli, wheat processed foods such as bread, noodle, confectionery, and Chinese meat dumpling, egg processed foods such as mayonnaise, milk processed foods, aquatic processed foods, and so forth. The "aquatic processed food" refers to a food produced from aquatic product(s) such as fish, shellfish, shrimp, crab, octopus, and cuttlefish. Form of the food containing a protein provided as a product is not particularly limited. That is, the food containing a protein may be provided in arbitrary forms such as raw food, heated product, frozen product, aseptically packaged product, retort product, dried product, and canned product.

### <2> Preparation of the present inventions

The preparation of the present invention is a preparation for modifying a food containing a protein, the preparation containing the following: an oxidizing agent and/or an oxidoreductase; and a metal and/or a metal-containing substance. In the present invention, the oxidizing agent and/or oxidoreductase and the metal and/or metal-containing substance are generically referred to as "active ingredients".

Such a preparation as mentioned above, wherein the oxidizing agent and/or oxidoreductase is a glucose oxidase, the metal and/or metal-containing substance is metal-containing yeast, and the food containing a protein is a processed aquatic food may be excluded from the scope of the preparation of the present invention.

The preparation of the present invention can be used for modifying a food containing a protein. Specifically, a food containing a protein can be modified by treating a food raw material containing a protein with the preparation of the present invention. Examples of the "modification" include improvement of physical properties such as mouthfeel. Specific examples the "modification" include,
in the case of rice, impartation or enhancement of "springy texture" of rice. The "springy texture" of rice may mean, for example, texture imparting such feeling that rice sticks to teeth like glutinous rice when the rice is bitten. Specific examples the "modification" also include, in the case of wheat, impartation or enhancement of "springy texture" of bread, and impartation or enhancement of "elasticity" or "undercooked feeling" of noodles. The "springy texture" of bread may mean, for example, texture that imparts elasticity sensed with teeth when bread is chewed. The "elasticity" of noodles may mean, for example, strength of repulsive force sensed by the whole inside of mouth. The "undercooked feeling" of noodles may mean, for example, difference of hardness of surface and hardness of inner core. Further, for example, degradation of shape and reduction of yield after processing of a food raw material may be suppressed by the modification.

According to the present invention, by using an oxidizing agent and/or an oxidoreductase in combination with a metal and/or a metal-containing substance, the effect of modifying a food containing a protein can be enhanced compared with the case where an oxidizing agent and/or an oxidoreductase is used alone. Such an effect as mentioned above is henceforth also referred to as "effect of combined use of active ingredients". In one embodiment, it is expected that, for example, the amount of the oxidoreductase to be used and the reaction time of the reaction catalyzed by the oxidoreductase can be reduced by the effect of combined use of active ingredients.

The preparation of the present invention contains an oxidizing agent and/or an oxidoreductase. The preparation of the present invention preferably contains an oxidoreductase.

The oxidizing agent is not particularly limited, so long as it can exhibit an oxidation action. The oxidizing agent may be one that exhibits an oxidation action against a food raw material to be treated. Examples of the oxidizing agent include hydrogen peroxide, glutathione, ascorbic acid, erythorbic acid, linolenic acid, and so forth. These oxidizing agents may be in the oxidized form. For example, glutathione may be oxidized glutathione (GSSG). Also, for example, ascorbic acid may be dehydroascorbic acid. An oxidizing agent that can be in the form of salt may be used in the form of salt. That is, the term "oxidizing agent" may mean an oxidizing agent as a free compound, a salt thereof, or a mixture thereof, unless otherwise stated. Examples of the salt include sodium salt and potassium salt. As the oxidizing agent, one kind of oxidizing agent may be used, or two or more kinds of oxidizing agents may be used in combination.

The oxidoreductase is not particularly limited so long as it can catalyze an oxidation-reduction reaction (redox reaction). The oxidoreductase may be, for example, one that directly or indirectly contributes to oxidization of a food raw material to be treated. The oxidoreductase may be, for example, one that catalyzes a reaction of generating an oxidizing agent. To the oxidizing agent mentioned here, the descriptions concerning the oxidizing agent mentioned above (i.e. oxidizing agent as one of the active ingredients) can be applied *mutatis mutandis.* Specifically, the oxidoreductase may be, for example, one that catalyzes a reaction of generating hydrogen peroxide. Examples of the oxidoreductase include glucose oxidase, ascorbate oxidase, phenol oxidase, lactoperoxidase, lysyl oxidase, and so forth. Glucose oxidase is an enzyme that catalyzes a reaction of generating gluconolactone and hydrogen peroxide by using glucose and oxygen as substrates, wherein gluconolactone is non-enzymatically hydrolyzed into gluconate. The ascorbate oxidase is an enzyme that catalyzes a reaction of generating dehydroascorbic acid and water by using ascorbic acid and oxygen as substrates. The phenol oxidase is a generic term for referring to an enzyme that catalyzes a reaction of oxidizing a phenol compound such as monophenols, diphenols, and polyphenols. Phenol oxidase is also called as tyrosinase, laccase, or polyphenol oxidase. Origin of the oxidoreductase is not particularly limited. The oxidoreductase may be derived from any origin such as microorganisms, animals, and plants. As the oxidoreductase, a homologue or artificially modified version of a known oxidoreductase may also be used. For example, there are known glucose oxidases of various origins, such as those derived from microorganisms such as *Aspergillus* fungi and those derived from plants, and any of such glucose oxidases may be used. Glucose oxidase may be a recombinant enzyme. Specific examples of the oxidoreductase include glucose oxidase derived from a microorganism and marketed from Shin Nippon Kagaku Industry with a brand name of "Sumizyme PGO". The oxidoreductase may or may not contain an ingredient other than the oxidoreductase. The oxidoreductase may contain, for example, another enzyme. For example, many of marketed glucose oxidase preparations contain catalase, and as the oxidoreductase, such a mixture of an oxidoreductase and another enzyme may be used. As the oxidoreductase, one kind of oxidoreductase may be used, or two or more kinds or oxidoreductases may be used in combination.

The preparation of the present invention contains a metal and/or a metal-containing substance.

The metal is not particularly limited, so long as the effect of combined use of active ingredients can be obtained. The metal may be, for example, a metal other than zinc, selenium, manganese, and molybdenum. Examples of the metal include calcium, chromium, copper, magnesium, iron, vanadium, and so forth. In particular, from the viewpoint of providing higher effect, a metal selected from chromium, copper, magnesium, iron, and vanadium is preferred, and iron is more preferred. The metal may be in any form such as simple substance and ion. As the metal, one kind of metal may be used, or two or more kinds of metals may be used in combination.

The metal-containing substance is not particularly limited, so long as the effect of combined use of active ingredients can be obtained. To the metal contained in the metal-containing substance, the descriptions concerning the metal mentioned above (i.e. metal as one of the active ingredients) can be applied *mutatis mutandis.* Examples of the metal-containing substance include metal salts and metal-containing foods. The metal-containing substance may contain one kind of metal, or may contain two or more kinds of metals in combination. As the metal-containing substance, one kind of ingredient may be used, or two or more kinds of ingredients may be used in combination.

Examples of the metal salt include calcium salt, chromium salt, copper salt, magnesium salt, iron salt, vanadium salt, and so forth. Among these, from the viewpoint of providing higher effect, a metal salt selected from chromium salt, copper salt, magnesium salt, iron salt, and vanadium salt is preferred, and iron salt is more preferred. Examples of the iron salt include ferrous chloride, ferric chloride, sodium ferrous citrate, ferric citrate, ferric ammonium citrate, ferrous gluconate, iron sesquioxide, sodium iron-chlorophyllin, iron lactate, ferric pyrophosphate, ferric sulfate, ferrous sulfate, heme iron, and so forth. The metal salt may be in any form such as salt and ion.

Examples of the metal-containing food include food additives containing a metal, metal-containing yeast, lactoferrin, lever, plasma, dried small sardines, bonito, freshwater clam, dried shrimp, dried seaweed, edible brown algae, Jew's-ear, curry powder, pepper, leaf of mulberry, spinach, Japanese mustard spinach, mugwort, angelica, burdock, and so forth. Among these, metal-containing yeast is preferred. The metal contained in the metal-containing food may also be a metal-containing substance such as metal salt. The metal or metal salt contained in the metal-containing food may be contained in any form such as simple substance, salt, and ion. The contained amount of the metal in the metal-containing food may be, for example, 0.0001 to 0.2 g per 1 g of the weight of the food.

As the metal-containing yeast, for example, one obtained by adding a metal to yeast at the time of culture thereof, so that the metal is incorporated into yeast cells, is known, but the metal-containing yeast is not limited thereto. Examples of the metal-containing yeast include calcium-containing yeast, chromium-containing yeast, copper-containing yeast, magnesium-containing yeast, iron-containing yeast, vanadium-containing yeast, and so forth. In particular, from the viewpoint of providing higher effect, yeast selected from chromium-containing yeast, copper-containing yeast, magnesium-containing yeast, iron-containing yeast, and vanadium-containing yeast is preferred, and iron-containing yeast is more preferred.
The contained amount of metal in the metal-containing yeast may be, for example, 0.001 to 0.1 g, preferably 0.01 to 0.08 g, more preferably 0.04 to 0.06 g, per 1 g of dry weight of yeast. The metal-containing yeast may be in any form such as powder, paste, and suspension. The metal-containing yeast may consist of living cells or sterilized cells. Type of the yeast is not particularly limited. Examples of the yeast include yeast belonging to the genus *Saccharomyces* such as *Saccharomyces cerevisiae,* yeast belonging to the genus *Schizosaccharomyces* such as *Schizosaccharomyces pombe,* and yeast belonging to the genus *Candida* such as *Candida utilis.* Among these, yeast belonging to the genus *Saccharomyces* or *Candida* is preferred. Specific examples of the metal-containing yeast include iron-containing yeast marketed by Sceti with the category name of "metal-containing yeast", and the iron-containing yeast described in Patent documents 4 and 5.

The preparation of the present invention may contain an ingredient other than the active ingredients (henceforth referred to as "other ingredient"), unless the intended purpose of the present invention is not degraded. As the other ingredient, for example, those to be blended in seasoning, foods and drinks, or drugs can be used.
Examples of the other ingredient include enzymes such as transglutaminase, excipients such as glucose, dextrin, starch, modified starch, and reduced malt sugar, proteins such as vegetable proteins, gluten, albumen, gelatin, and casein, seasonings such as sodium glutamate, animal product extract, aquatic product extract, protein hydrolysate, and protein partial decomposition product, alkaline agents (pH adjustor) such as sodium carbonate, potassium carbonate, and calcined calcium, chelating agents such as gluconic acid and citric acid, oxidizing or reducing agents such as sodium ascorbate, glutathione, and cysteine, other food additives such as alginic acid, lye water, oil and fat, dye, acidulant, and perfume, and so forth. As the other ingredient, one kind of ingredient may be used, or two or more kinds of ingredients may be used in combination. The preparation of the present invention can be prepared by, for example, mixing the active ingredients with this/these other ingredient(s), as required.

The preparation of the present invention may contain a substrate of the oxidoreductase. Examples of the substrate of the oxidoreductase include glucose, which is the substrate of glucose oxidase, ascorbic acid, which is the substrate of ascorbate oxidase, and phenol compound, which is the substrate of phenol oxidase. A substrate that can be in the form of salt may be used in the form of salt. That is, the term "substrate" may mean a substrate as a free compound, a salt thereof, or a mixture of them, unless otherwise stated. Examples of the salt include sodium salt and potassium salt. The preparation of the present invention may contain the oxidoreductase and a substrate thereof in combination. That is, for example, the preparation of the present invention may contain glucose oxidase and glucose, ascorbate oxidase and ascorbic acid, or phenol oxidase and a phenol compound. Alternatively, the preparation of the present invention not containing a certain oxidoreductase may contain a substrate thereof. That is, for example, the preparation of the present invention not containing glucose oxidase may contain glucose.

Form of the preparation of the present invention is not particularly limited. The preparation of the present invention may be in any form such as liquid, paste, granule, and powder. The preparation of the present invention is preferably in the form of, for example, powder.

The total contained amount of the active ingredients in the preparation of the present invention is larger than 0% (w/w) and smaller than 100% (w/w). The total contained amount of the active ingredients in the preparation of the present invention may be, for example, 1 ppm (w/w) or higher, 10 ppm (w/w) or higher, 100 ppm (w/w) or higher, or 1000 ppm (w/w) or higher. The total contained amount of the active ingredients in the preparation of the present invention may be, for example, 99.9% (w/w) or lower, 50% (w/w) or lower, 10% (w/w) or lower, or 1% (w/w) or lower.

When an oxidoreductase such as glucose oxidase is used as the active ingredient, the contained amount of the metal and/or metal-containing substance in the preparation of the present invention may be, for example, 0.00000005 g or higher, 0.0000005 g or higher, or 0.000014 g or higher, or may be 0.05 g or lower, 0.005 g or lower, or 0.0005 g or lower, in terms of the amount of metal, per 1 U of the oxidoreductase. The contained amount of the metal and/or metal-containing substance in the preparation of the present invention is, for example, preferably 0.00000005 to 0.0005 g, more preferably 0.0000005 to 0.0005 g, further preferably 0.000014 to 0.0005 g, in terms of the amount of metal, per 1 U of the oxidoreductase.

When an oxidoreductase such as glucose oxidase and metal-containing yeast such as iron-containing yeast are used as the active ingredients, the contained amount of the metal-containing yeast in the preparation of the present invention may be, for example, 0.000001 g or higher, 0.00001 g or higher, or 0.0003 g or higher, or may be 1 g or lower, 0.1 g or lower, or 0.01 g or lower, in terms of dry weight, per 1 U of the oxidoreductase. The contained amount of the metal-containing yeast in the preparation of the present invention is, for example, preferably 0.000001 to 0.01 g, more preferably 0.00001 to 0.01 g, further preferably 0.0003 to 0.01 g, in terms of dry weight, per 1 U of the oxidoreductase.

The activity of the oxidoreductases such as glucose oxidase can be measured in a conventional manner. Examples of the method for measuring the glucose oxidase activity include, for example, the following method. That is, glucose oxidase is allowed to act on glucose as a substrate in the presence of oxygen to generate hydrogen peroxide. Peroxidase is allowed to act on the generated hydrogen peroxide in the presence of aminoantipyrine and phenol to generate a quinoneimine dye. The generated quinone imine dye is measured at a wavelength of 500 nm, and the amount of enzyme required to oxidize 1 µmol of glucose in 1 minute is defined as 1 U (unit). Specifically, the procedure is as follows. Glucose oxidase is dissolved in a 0.1 mol/L phosphate buffer (potassium dihydrogenphosphate, adjust to pH 7.0 with aqueous sodium hydroxide) by stirring, and the solution is diluted 50 times with a 0.1 mol/L phosphate buffer to prepare a GO solution. To an analysis cell, 2.0 mL of a buffer containing phenol (obtained by mixing Milli Q, 1.36 g of potassium dihydrogenphosphate, 3 mL of 5% phenol test solution, and 3 mL of 5% triton X-100 solution, and adjusting the resulting mixture to pH 7.0 with aqueous sodium hydroxide, and a total volume of 100 mL), 500 µL of 10% glucose solution, 500 µL of a 0.01% peroxidase solution (PO"Amano"3 (1250 U ± 250 U) is used), and 100 µL of a 0.4% 4-aminoantipyrine solution are successively added in this order, mixed by inverting the cell, and maintained at 37 ± 0.1°C for 10 minutes. To the above analysis cell, 100 µL of the GO solution is added, measurement is automatically performed at 11 time points every 30 seconds over 5 minutes, and the GO activity value is measured from the increment (inclination) between 120 seconds and 300 seconds. A value measured by adding a 0.1 mol/L phosphate buffer instead of the GO solution in the above procedure as the blank is subtracted from the value obtained by the experiment using GO. As also for oxidoreductases other than glucose oxidase, the amount of enzyme required to oxidize or reduce 1 µmol of a substrate in 1 minute is defined as 1 U (unit).

The concentrations of the active ingredients in the preparation of the present invention can be set so that, for example, the total concentration and content ratio of the active ingredients mentioned above are satisfied.

The ingredients contained in the preparation of the present invention (i.e. the active ingredients and other ingredients used as required) may be contained in the preparation of the present invention as a mixture thereof, separate ingredients, or separate arbitrary combinations thereof. For example, the preparation of the present invention may be provided as a set of an oxidizing agent and/or an oxidoreductase, and a metal and/or a metal-containing substance, which are separately packaged. In such a case, the ingredients contained in the set can be appropriately used together at the time of use.

### <3> Method of the present inventions

According to the present invention, by using the active ingredients (i.e. an oxidizing agent and/or an oxidoreductase and a metal and/or a metal-containing substance), a food containing a protein can be modified. That is, the method of the present invention is a method for modifying a food containing a protein, which comprises treating a food raw material containing a protein with the active ingredients. An embodiment of the method of the present invention is a method for producing a modified food containing a protein, which comprises treating a food raw material containing a protein with the active ingredients. To "treat a food raw material with the active ingredients" is also expressed as to "allow the active ingredients to act on a food raw material". A step of "treating a food raw material with the active ingredients" is also referred to as "modification step".

In the present invention, specifically, by treating a food raw material with the preparation of the present invention, the food raw material can be treated with the active ingredients. That is, in other words, the method of the present invention may be a method for modifying a food containing a protein, which comprises treating a food raw material containing a protein with the preparation of the present invention. An embodiment of the method of the present invention may be a method for producing a modified food containing a protein, which comprises treating a food raw material containing a protein with the preparation of the present invention.

Such a method as mentioned above wherein the oxidizing agent and/or oxidoreductase is a glucose oxidase, the metal and/or metal-containing substance is metal-containing yeast, and the food containing a protein is a processed aquatic food may be excluded from the scope of the method of the present invention.

The food containing a protein of the present invention can be produced by using materials and method similar to those used for usual foods containing a protein, except that the treatment with the active ingredients is performed. The active ingredients may be allowed to act on a food raw material at any stage of the production process for a food containing a protein. By making the active ingredients coexist with a food raw material, as they are, or after preparing a solution thereof etc. as required, they can be allowed to act on the food raw material. For example, the active ingredients may be added to a food raw material, or a food raw material may be immersed in a treatment solution containing the active ingredients. Such operations for making the active ingredients coexist with a food raw material are henceforth generically referred to as "addition" of the active ingredients. Order of the active ingredients to be allowed to act on a food raw material is not particularly limited. The active ingredients may be allowed to act on a food raw material by simultaneously adding all the active ingredients to the food raw material, or by adding them as separate ingredients or separate arbitrary combinations thereof to the food raw material. Treatment with the preparation of the present invention can also be carried out in a similar manner.

Conditions for performing the modification step of the method of the present invention are not particularly limited so long as the effect of combined use of the active ingredients is obtained. The conditions for performing the modification step of the method of the present invention can be appropriately set according to various conditions such as types and addition amounts of the active ingredients, and type and form of the food raw material. For example, when an oxidoreductase such as glucose oxidase is used, reaction time is not particularly limited so long as it is determined so that the oxidoreductase can act on the substrate substance. The reaction time is, for example, preferably 1 minute to 24 hours, more preferably 5 minutes to 24 hours, further preferably 5 minutes to 2 hours. When an oxidoreductase such as glucose oxidase is used, reaction temperature is not particularly limited, so long as it is set within such a range that the oxidoreductase maintains the activity thereof. The reaction temperature is, for example, preferably 0 to 80°C, more preferably 4 to 60°C. That is, sufficient reaction time can also be obtained while the food raw material undergoes the steps of immersion, mixture, heating, and so forth in the production process of a food containing a protein. In the method of the present invention, the production process of the food containing a protein may also serve as the modification step, or the modification step may be separately carried out.

The addition amounts and addition ratios of the ingredients used in the method of the present invention (i.e. the active ingredients and other ingredients used as required) are not particularly limited as long as the effect of combined use of active ingredients is obtained. The addition amounts and addition ratios of the ingredients used in the method of the present invention can be appropriately set according to various conditions such as type and form of the raw material of the food containing a protein.

When an oxidoreductase such as glucose oxidase is used as the active ingredient, the addition amount of the oxidoreductase is, for example, preferably 0.0001 to 100 U, more preferably 0.001 to 10 U, per 1 g of the food raw material such as rice, wheat, egg, meat, and milk.

The addition amount of the metal and/or metal-containing substance may be, for example, 0.000000013 g or higher, 0.00000005 g or higher, 0.00000013 g or higher, 0.000005 g or higher, or 0.0000037 g or higher, or may be 0.005 g or lower, 0.0005 g or lower, or 0.00013 g or lower, in terms of the amount of metal, per 1 g of the food raw material such as rice, wheat, egg, meat, and milk. The addition amount of the metal and/or metal-containing substance is, for example, preferably 0.000000013 to 0.00013 g, more preferably 0.00000013 to 0.00013 g, further preferably 0.0000037 to 0.00013 g, in terms of the amount of metal, per 1 g of the food raw material such as rice, wheat, egg, meat, and milk. When an oxidoreductase such as glucose oxidase is used as the active ingredient, the addition amount of the metal and/or metal-containing substance may be, for example, 0.00000005 g or higher, 0.0000005 g or higher, or 0.000014 g or higher, or may be 0.05 g or lower, 0.005 g or lower, or 0.0005 g or lower, in terms of the amount of metal, per 1 U of the oxidoreductase. The addition amount of the metal and/or metal-containing substance is, for example, preferably 0.00000005 to 0.0005 g, more preferably 0.0000005 to 0.0005 g, further preferably 0.000014 to 0.0005 g, in terms of the amount of metal, per 1 U of the oxidoreductase.

When metal-containing yeast such as iron-containing yeast is used as the active ingredient, the addition amount of the metal-containing yeast may be, for example, 0.00000025 g or higher, 0.000001 g or higher, 0.0000026 g or higher, 0.00001 g or higher, or 0.00002 g or higher, or may be 0.1 g or lower, 0.005 g or lower, or 0.0027 g or lower, in terms of dry weight, per 1 g of the food raw material such as rice, wheat, egg, meat, and milk. When a metal-containing yeast such as iron-containing yeast is used as the active ingredient, the addition amount of the metal-containing yeast is, for example, preferably 0.00000025 to 0.0027 g, more preferably 0.0000026 to 0.0027 g, further preferably 0.00002 to 0.0027 g, in terms of dry weight, per 1 g of the food raw material such as rice, wheat, egg, meat, and milk. When an oxidoreductase such as glucose oxidase and metal-containing yeast such as iron-containing yeast are used as the active ingredients, the addition amount of the metal-containing yeast may be, for example, 0.000001 g or higher, 0.00001 g or higher, or 0.0003 g or higher, or may be 1 g or lower, 0.1 g or lower, or 0.01 g or lower, in terms of dry weight, per 1 U of the oxidoreductase. The addition amount of the metal-containing yeast is, for example, preferably 0.000001 to 0.01 g, more preferably 0.00001 to 0.01 g, further preferably 0.0003 to 0.01 g, in terms of dry weight, per 1 U of the oxidoreductase.

In the method of the present invention, a substrate of the oxidoreductase may be added. In the method of the present invention, the oxidoreductase and a substrate thereof may be used in combination. That is, for example, glucose oxidase and glucose may be used in combination, ascorbate oxidase and ascorbic acid may be used in combination, and phenol oxidase and a phenol compound may be used in combination. Further, in the method of the present invention, when a certain oxidoreductase is not used, a substrate thereof may be added. That is, for example, when glucose oxidase is not added, glucose may be added. By using an oxidoreductase and a substrate thereof in combination, a food containing a protein can be modified, for example, with a smaller amount of the enzyme compared with the case of adding only the oxidoreductase, and therefore it is expected that the addition amount of the oxidoreductase can be reduced. The addition amount of a substrate of the oxidoreductase such as glucose may be, for example, 0.0001 to 0.1 g, preferably 0.001 to 0.05 g, more preferably 0.005 to 0.01 g, per 1 g of the food raw material.

### Examples

Hereafter, the present invention will be more specifically explained with reference to examples. The present invention is not limited at all by these examples.

### <Example 1> Modification of cooked rice by combined use of glucose oxidase and iron-containing yeast

Rice is a major food eaten all over the world including Japan, and not only cooked rice, it is also processed into various forms and marketed, and hence, it can be said to be a representative food containing a protein. Therefore, effect of combined use of glucose oxidase and iron-containing yeast was examined for cooed rice as an example.

Rice was measured in the amounts shown in Table 1. The rice was washed first, water was added so that the amounts shown in Table 1 were obtained, and the rice was immersed in water (1 hour). Then, glucose oxidase and iron-containing yeast were added in the amounts shown in Table 1, and the rice was cooked (45 minutes). After the completion of cooking rice, a flat wooden spoon was put into the inner circumference of the rice pot, and the pot was inversed to tip the rice into a vat. Hard portions of the rice that had contacted with the inner surface of the pot were removed, and the remaining rice was wrapped with a plastic wrap so as not to dry, and vacuum-cooled in a vacuum-cooling machine. After the vacuum cooling, the rice was put into a container so as not to crush grains of the rice, the container was packaged with a plastic wrap so that air might not enter into the container, put into an incubator (20°C), and kept therein until the temperature of the rice became 20°C. Organoleptic evaluation was performed for the rice kept until the temperature thereof became 20°C. The organoleptic evaluation was performed for "springy texture". The "springy texture" as the evaluation item means texture imparting such feeling that rice sticks to teeth like glutinous rice when the rice is bitten. The score of "springy texture" for the sample of the no addition group (#1) was defined to be 0, and the evaluation results were represented by scores of 0 to 4, wherein the scores 1, 2, 3, and 4 represent slightly better, better, markedly better, and extremely markedly better results compared with the result of score 0, respectively. The evaluation was performed by four special panels, and average values of the results are mentioned in the table. "GO" mentioned in the table means glucose oxidase. "Sumizyme PGO" (Shin Nippon Kagaku Industry) was used as the glucose oxidase, and "Iron-containing yeast" (iron content 5 weight %, Sceti) was used as the metal-containing yeast. The specific activity of the glucose oxidase was 2,220 U/g. Per 1 g of the rice, the addition amount of the glucose oxidase was 1.33 U, and the addition amount of the iron-containing yeast was 0.000060 g.

[Table 1]

**Table 1**

| | #1 | #2 | #3 | #4 | |
|---|---|---|---|---|---|
| Experimental group | No addition | GO | Iron-containing yeast | GO + Iron-containing yeast | |
| Rice | 400 | 400 | 400 | 400 | |
| Rice + water | 960 | 960 | 960 | 960 | |
| GO | - | 0.24 | - | 0.24 | |
| Iron-containing yeast | - | - | 0.024 | 0.024 | (Unit, g) |
| Springy texture | 0 | 1.53 | 0 | 3.55 | (Unit, score) |

The results of the organoleptic evaluation are shown in Table 1. Whereas the organoleptic evaluation score of "springy texture" for the experimental group for which only glucose oxidase was added (#2) was 1.53, the score of the experimental group for which glucose oxidase and iron-containing yeast were used in combination (#4) was 3.55. Further, the score of the experimental group for which only iron-containing yeast was added (#3) was 0, like the no addition group (#1). That is, by using glucose oxidase and iron-containing yeast in combination, there was obtained a mouthfeel-improving effect higher than that obtained by adding the same amount of glucose oxidase or iron-containing yeast alone. From the results described above, it was revealed that, by using glucose oxidase and iron-containing yeast in combination, a synergistic effect for modifying a food containing a protein can be obtained. Therefore, it is considered that, by using an oxidoreductase such as glucose oxidase and a metal-containing substance such as iron-containing yeast in combination, for example, the amount of the oxidoreductase to be used or reaction time for the reaction catalyzed by the oxidoreductase can be reduced.

### <Example 2> Modification of bread by combined use of glucose oxidase and iron-containing yeast

Wheat is a major food eaten all over the world, and many wheat products are marketed, and hence, it can be said to be a representative food containing a protein. Therefore, effect of combined use of glucose oxidase and iron-containing yeast was examined for bread as an example, which is a representative wheat product.

Among the raw materials shown in Table 2, the powdery raw materials except for water were mixed in a mixer (kneading temperature 25°C, 15 minutes). The obtained dough was taken out, left standing for 10 minutes, then divided and shaped (70 g), and left standing for 10 minutes. Moistened kitchen paper was put on the dough during it was left standing so that the dough might not dry. Then, the dough was quick-frozen (-40°C, 30 minutes), and stored in a freezer (-20°C, one day). After the frozen storage, baked bread and fried bread were produced, left to cool to room temperature, and evaluated. The baked bread was produced by thawing the frozen dough (25°C, 150 minutes), allowing fermentation (38°C, 85% of humidity, 60 minutes), and baking the fermented dough in an oven (210°C, 10 minutes). The fried bread was produced by thawing the frozen dough (25°C, 150 minutes), and frying it in oil (180°C, 3 minutes). The baked bread was cut into halves, the section was photographed, and swelling was evaluated. The fried bread was cut, and the internal texture was organoleptically evaluated. The organoleptic evaluation of the fried bread was performed for "springy texture". The evaluation item of "springy texture" means texture imparting elastic feeling sensed by teeth at the time of chewing. The score of "springy texture" for a sample of the no addition group (#1) was defined to be 0, and the evaluation results were represented by scores of 0 to 2, wherein the scores 0.5, 1, 1.5, and 2 represent slightly better, better, markedly better, and extremely markedly better results compared with the result of score 0, respectively. The evaluation was performed by four special panels, and average values of the results are mentioned in the table. "GO" mentioned in the table means glucose oxidase. "Sumizyme PGO" (Shin Nippon Kagaku Industry) was used as the glucose oxidase, and "Iron-containing yeast" (iron content 5 weight %, Sceti) was used as the metal-containing yeast. The specific activity of the glucose oxidase was 2,220 U/g. Per 1 g of the raw material wheat flour, the addition amount of the glucose oxidase was 0.015 U or 0.15 U, and the addition amount of the iron-containing yeast was 0.00033 g.

[Table 2]

**Table 2**

| | #1 | #2 | #3 | #4 | |
|---|---|---|---|---|---|
| Experimental group | No addition | GO | GO (1/10) | GO (1/10) + Iron-containing yeast | |
| Nisshin Camellia strong wheat flour | 150 | 150 | 150 | 150 | |
| Salt | 3 | 3 | 3 | 3 | |
| Nisshin Super Camellia dry yeast | 3 | 3 | 3 | 3 | |
| Glucose | 1 | 1 | 1 | 1 | |
| Water | 105 | 105 | 105 | 105 | |
| GO | - | 0.01 | 0.001 | 0.0001 | |
| Iron-containing yeast | - | - | - | 0.05 | (Unit, g) |
| Springy texture | 0 | 1.03 | 0 | 1.53 | (Unit, score) |

The results (photographs) of the comparison of the appearance of the baked bread are shown in Fig. 1. As shown in Fig. 1, whereas the swelling of the dough was small in the no addition group (#1), the dough greatly swelled about 1.3 times in the group for which only glucose oxidase was added (#2). Since the effect of glucose oxidase was insufficient in the group for which addition amount of glucose oxidase was made to be 1/10 (#3), swelling of the dough was small, like the no addition group (#1). In contrast, in the group for which addition amount of glucose oxidase was made to be 1/10, and iron-containing yeast was also added (#4), almost the same swelling as that observed for the group for which glucose oxidase was added in a usual addition amount (#2) was obtained. From these results, it was found that, by using glucose oxidase and iron-containing yeast in combination, degradation of the shape of bread such as crush of the form and reduction of volume can be suppressed, while reducing the amount of glucose oxidase to be used. The results of the organoleptic evaluation of the fried bread are shown in Table 2. From the results shown in Table 2, it can be seen that almost the same tendency as that observed for the baked bread was observed also for the fried bread. That is, for the group for which the addition amount of glucose oxidase was made to be 1/10, and iron-containing yeast was also added (#4), the score for the "springy texture" of the fried bread of 1.53 was obtained, which score exceeds the score of the group for which glucose oxidase was added in a usual addition amount (#2), 1.03. From the results mentioned above, it was revealed that, by using glucose oxidase and iron-containing yeast in combination, a synergistic modification effect can be obtained also for bread. It was also found that, by using glucose oxidase and iron-containing yeast in combination, mouthfeel of stronger springy texture can be obtained while reducing the amount of glucose oxidase to be used. Therefore, the present invention is effective in the manufacturing processes of various foods containing a protein, including, for example, bread.

### <Example 3> Modification of Japanese wheat flour noodles (udon) by combined use of glucose oxidase and iron-containing yeast

Further, in order to examine whether the present invention is applicable to a wheat product other than bread, effect of combined use of glucose oxidase and iron-containing yeast was examined for noodles (Japanese wheat flour noodles (udon) served as cold noodles) as an example, which are one of the typical wheat products.

The materials were weighed in the amounts shown in Table 3. All the raw materials except for water and salt were mixed beforehand to obtain powder mix. Separately, salt was mixed with water to obtain saltwater. While the powder mix was kneaded in a kneading machine (2 kg, vacuum kneading machine, Ohtake Noodles Machine Co., Ltd., 100 rpm for 3 minutes and 50 rpm for 2 minutes), the saltwater was added little by little. After kneading, the dough was taken out, and subjected to formation of belt-shaped dough, compounding of belt-shaped dough, and rolling of dough in a noodle-making machine with the conditions shown in Table 4. The rolled dough was cut with a cutting blade of #10 (2.3 mm), dusted with flour, filled in a bag, and stored in a freezer (-20°C, one day). After the frozen storage, the noodles were boiled in boiling water (100°C, 19 minutes). After the boiling, the noodles were cooled with ice by immersing them in a sufficient volume of ice water (0°C, 3 minutes). The boiling and ice-cooling were performed with lightly unfolding the noodles with chopsticks to such an extent that the noodles were not damaged, so that the whole noodles were uniformly boiled and ice-cooled. The ice-cooled noodles were tipped into a colander, and organoleptic evaluation was performed. The organoleptic evaluation items were "elasticity" and "undercooked feeling". The "elasticity" means strength of repulsive force sensed by the whole inside of mouth, and the "undercooked feeling" means difference of hardness of surface and hardness of inner core. The scores of "elasticity" and "undercooked feeling" for the no addition sample (#1) was defined to be 0, and the evaluation results were represented by scores of 0 to 3, wherein the scores 0.5, 1, 2, and 3 represent slightly better, better, markedly better, and extremely markedly better results compared with the result of score 0, respectively. The evaluation was performed by four special panels, and average values of the results are mentioned in the table. "GO" mentioned in the table means glucose oxidase. "Sumizyme PGO" (Shin Nippon Kagaku Industry) was used as the glucose oxidase, and "Iron-containing yeast" (iron content 5 weight %, Sceti) was used as the metal-containing yeast. The specific activity of the glucose oxidase was 2,220 U/g. Per 1 g of the raw material wheat flour and starch, the addition amount of the glucose oxidase was 0.26 U, and the addition amount of the iron-containing yeast was 0.0000625 g.

[Table 3]

**Table 3**

| | #1 | #2 | #3 | #4 | |
|---|---|---|---|---|---|
| Experimental group | No addition | GO | Iron-containing yeast | GO + Iron-containing yeast | |
| Tokusuzume, medium flour, Nisshin Flour Milling | 600 | 600 | 600 | 600 | |
| Matsutani Ajisai, processed starch, Matsutani Chemical Industries | 200 | 200 | 200 | 200 | |
| Water | 328 | 328 | 328 | 328 | |
| Salt | 16 | 16 | 16 | 16 | |
| GO | - | 0.095 | - | 0.095 | |
| Iron-containing yeast | - | - | 0.05 | 0.05 | (Unit, g) |
| Elasticity | 0 | 1.05 | 0 | 1.53 | |
| Undercooked feeling | 0 | 1.08 | 0 | 2.13 | (Unit, score) |

[Table 4]

**Table 4**

| Step | Thickness of noodle |
|---|---|
| Formation of belt-shaped dough and compounding | 9 mm |
| Rolling (1st time) | 9 mm |
| Rolling (2nd time) | 5.4 mm |
| Rolling (3rd time) | 2.9 mm |
| Rolling (4th time) | 2.3 mm |

The results of the organoleptic evaluation are shown in Table 3. As shown as the results, whereas the scores of "elasticity" and "undercooked feeling" for the experimental group for which only glucose oxidase was added (#2) were 1.05 and 1.08, respectively, the scores of "elasticity" and "undercooked feeling" for the experimental group for which glucose oxidase and iron-containing yeast were used in combination (#4) were 1.53 and 2.13, respectively. Further, the scores for the experimental group for which only iron-containing yeast was added (#3) were 0, like the no addition group (#1). That is, it was revealed that, by using glucose oxidase and iron-containing yeast in combination, there was obtained a mouthfeel-improving effect higher than that obtained by adding the same amount of glucose oxidase or iron-containing yeast alone. From the results described above, it was revealed that, by using glucose oxidase and iron-containing yeast in combination, a synergistic modification effect can be obtained also for Japanese wheat flour noodles. Therefore, it is considered that, by using an oxidoreductase such as glucose oxidase and a metal-containing substance such as iron-containing yeast in combination, for example, the amount of the oxidoreductase to be used or reaction time for the reaction catalyzed by the oxidoreductase can be reduced.

### <Example 4> Evaluation of oxidoreductase other than glucose oxidase (1)

In order to examine whether the present invention is feasible with an oxidoreductase other than glucose oxidase, effect of combined use of ascorbate oxidase and iron-containing yeast was examined for one of the typical wheat products, noodles (Japanese wheat flour noodles served as cold noodles), as an example.

The materials were weighed in the amounts shown in Table 5, noodles were produced, and organoleptic evaluation of them was performed. The method for producing the noodles and the conditions of the organoleptic evaluation were the same as those of Example 3. The glucose oxidase and iron-containing yeast used were the same as those used in Example 3. "GO" mentioned in the table means glucose oxidase. "AscO" mentioned in the table means ascorbate oxidase, and "Asc" mentioned in the table means ascorbic acid.

[Table 5]

**Table 5**

| Experimental group | #1 | #2 | #3 | #4 | #5 | #6 | |
|---|---|---|---|---|---|---|---|
| | No addition | GO | Iron-containing yeast | GO + Iron-containing yeast | AscO + Asc | AscO + Asc + Iron-containing yeast | |
| Semi-strong wheat flour (Suzume, Nisshin Flour Milling) | 600 | 600 | 600 | 600 | 600 | 600 | |
| Processed starch (Ajisai, Matsutani Chemical Industries) | 200 | 200 | 200 | 200 | 200 | 200 | |
| Glucose | 0.8 | 0.8 | 0.8 | 0.8 | 0.8 | 0.8 | |
| GO | - | 0.0960 | - | 0.0960 | - | - | |
| Iron-containing yeast | - | - | 0.0591 | 0.0591 | - | 0.0591 | |
| Ascorbate oxidase (ASO-10, Nagase ChemteX) | - | - | - | - | 0.1200 | 0.1200 | |
| Sosium L-ascorbate (New Chemical Trading) | - | - | - | - | 0.4 | 0.4 | |
| Water | 328 | 328 | 328 | 328 | 328 | 328 | |
| Salt (NaCI M) | 24 | 24 | 24 | 24 | 24 | 24 | (Unit, g) |
| Undercooked feeling | 0 | 1 | 0 | 1.5 | 0.5 | 1 | |
| Elasticity | 0 | 1 | 0 | 1.5 | 0.5 | 1 | (Unit, score) |
| Result | - | - | - | Effect of combined use of iron-containing yeast was observed. | - | Effect of combined use of iron-containing yeast was observed. | |

The results of the organoleptic evaluation are shown in Table 5. From the results of #1 to #4, it was confirmed again that, by using glucose oxidase and iron-containing yeast in combination, there was obtained a mouthfeel (undercooked feeling and elasticity)-improving effect higher than that obtained by adding each alone. Further, as seen from the results of #1, #3, #5, and #6, by using ascorbate oxidase and iron-containing yeast in combination, there was also obtained a mouthfeel (undercooked feeling and elasticity)-improving effect higher than that obtained by adding each alone. From the results described above, it was revealed that not only when glucose oxidase is used, but also when an oxidoreductase other than glucose oxidase such as ascorbate oxidase is used, a synergistic effect for modifying a food containing a protein can be obtained by combined use thereof with iron-containing yeast.

### <Example 5> Evaluation of oxidoreductase other than glucose oxidase (2)

In order to examine whether the present invention is feasible with an oxidoreductase other than glucose oxidase, effect of combined use of phenol oxidase and iron-containing yeast was examined for one of the typical wheat products, noodles (Japanese wheat flour noodles served as cold noodles), as an example.

The materials were weighed in the amounts shown in Table 6, noodles were produced, and organoleptic evaluation of them was performed. The method for producing the noodles and the conditions of the organoleptic evaluation were the same as those of Example 3. The glucose oxidase and iron-containing yeast used were the same as those used in Example 3. "GO" mentioned in the table means glucose oxidase.

[Table 6]

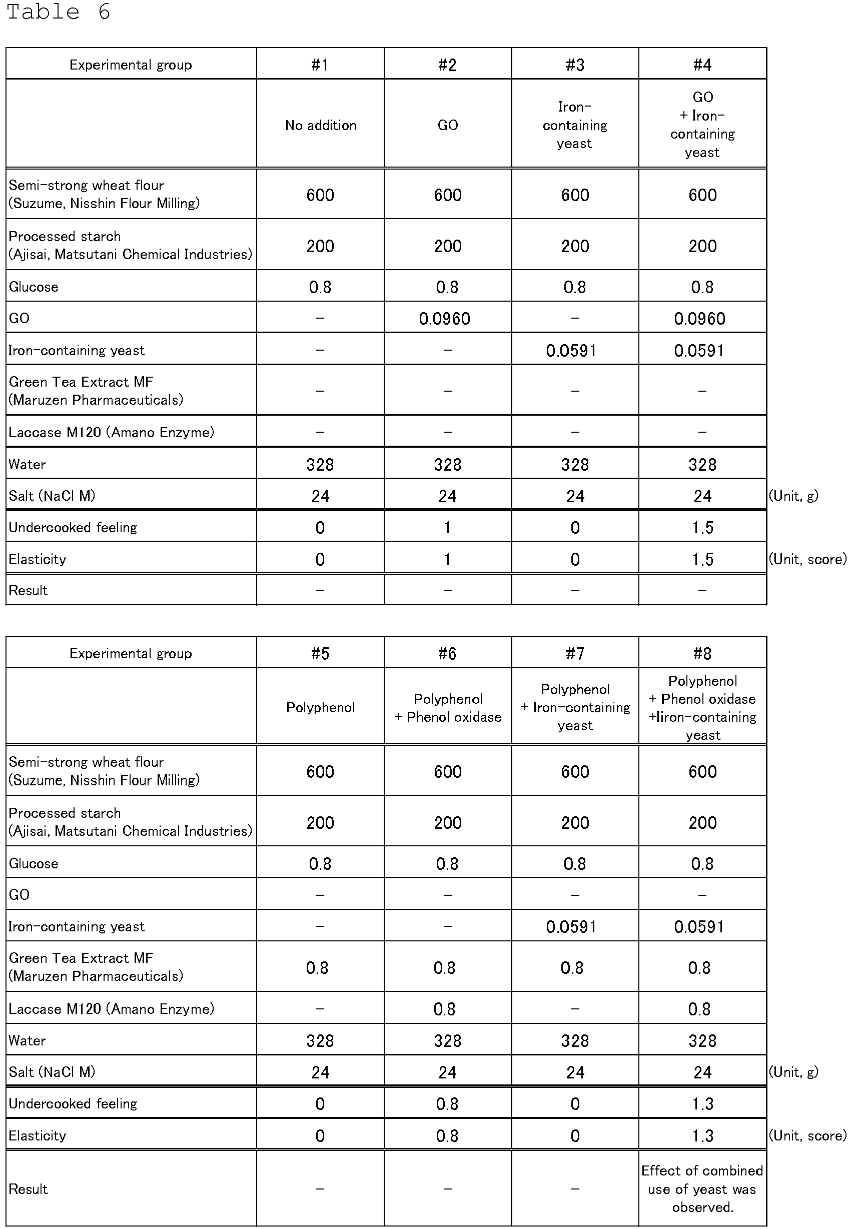

The results of the organoleptic evaluation are shown in Table 6. As seen from the results of #1, #3 and #5 to #8, by using phenol oxidase and iron-containing yeast in combination, there was also obtained a mouthfeel (undercooked feeling and elasticity)-improving effect higher than that obtained by adding each alone. From the results described above, it was revealed that not only when glucose oxidase is used, but also when an oxidoreductase other than glucose oxidase such as phenol oxidase is used, a synergistic effect for modifying a food containing a protein can be obtained by combined use thereof with iron-containing yeast.

### <Example 6> Evaluation of effect of combined use of glucose oxidase and iron-containing yeast for shortening treatment time

For one of the typical wheat products, noodles (Japanese wheat flour noodles served as cold noodles), as an example, whether the combined use of glucose oxidase and iron-containing yeast can shorten the treatment time for glucose oxidase was examined.

The materials were weighed in the amounts shown in Table 7, noodles were produced, and organoleptic evaluation of them was performed. The method for producing the noodles and the conditions of the organoleptic evaluation were the same as those of Example 3. For the experimental groups for which indication of "Aging" is attached, after the noodle making and packaging, and before storage in a freezer, the noodles were left standing at room temperature (25°C) (aging step) for the indicated times. The glucose oxidase and iron-containing yeast used were the same as those used in Example 3. "GO" mentioned in the table means glucose oxidase.

[Table 7]

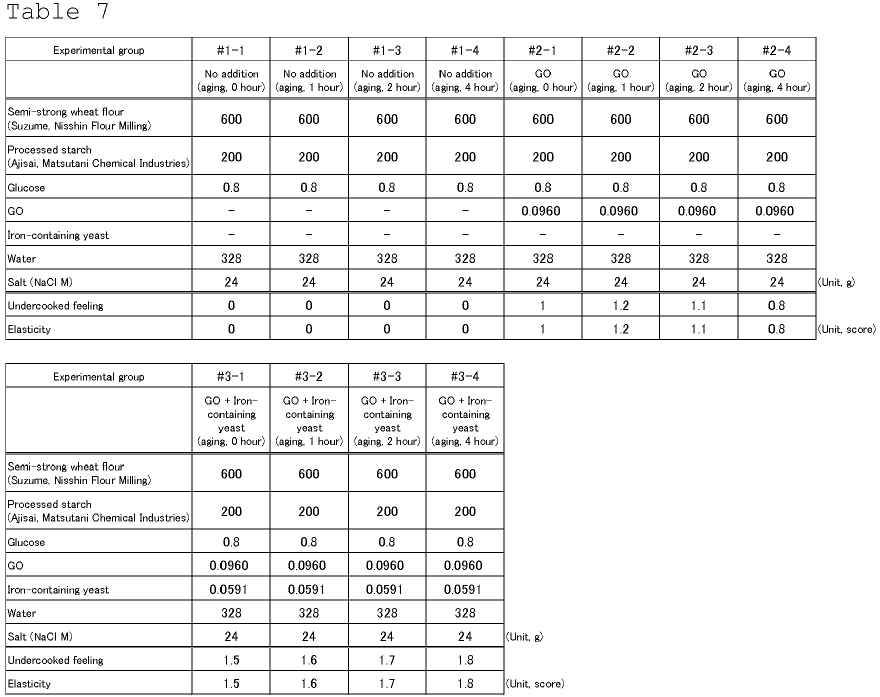

The results of the organoleptic evaluation are shown in Table 7. As seen from the results of #2-1 to #2-4, and #3-1, by using glucose oxidase and iron-containing yeast in combination, there was obtained a mouthfeel (undercooked feeling and elasticity)-improving effect higher than that obtained by adding glucose oxidase alone with a prolonged period of the aging step, even without performing the aging step. From the results described above, it was revealed that, by using glucose oxidase and iron-containing yeast in combination, an effect for modifying a food containing a protein can be obtained within a shorter period of time compared with that required in the case of adding glucose oxidase alone.

### <Example 7> Evaluation of metal-containing yeast other than iron-containing yeast

In order to examine whether the present invention is feasible with metal-containing yeast other than iron-containing yeast, effect of combined use of glucose oxidase and various metal-containing yeasts was examined for one of the typical wheat products, noodles (Japanese wheat flour noodles served as cold noodles), as an example.

The materials were weighed in the amounts shown in Table 8, noodles were produced, and organoleptic evaluation of them was performed. The method for producing the noodles and the conditions of the organoleptic evaluation were the same as those of Example 3. The glucose oxidase and iron-containing yeast used were the same as those used in Example 3. As the metal-containing yeasts other than iron-containing yeast, various metal-containing yeasts produced by Sceti were used. "GO" mentioned in the table means glucose oxidase.

[Table 8]

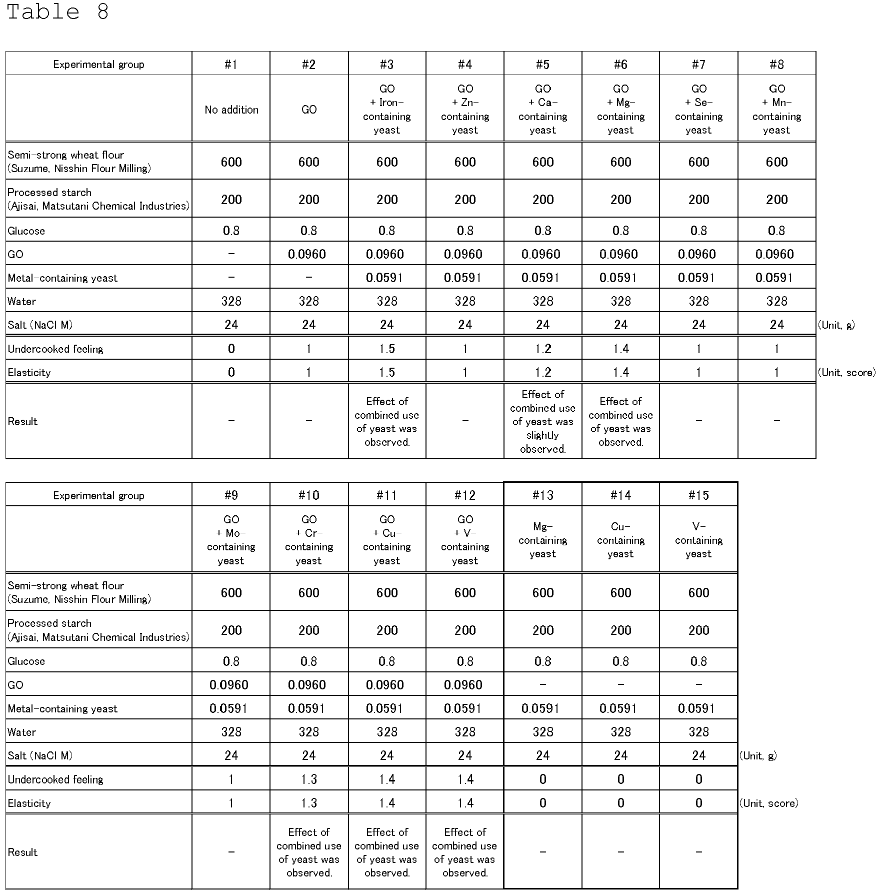

The results of the organoleptic evaluation are shown in Table 8. As seen from the results of #3, #5, #6, #10, #11, and #12, by using glucose oxidase and each of the various metal-containing yeasts in combination, there was obtained a mouthfeel (undercooked feeling and elasticity)-improving effect higher than that obtained by adding glucose oxidase alone. Further, as seen from the results of #13 to #15, when each of the various metal-containing yeasts alone was added, the mouthfeel-improving effect was not observed. From the results described above, it was revealed that not only when iron-containing is used, but also when yeast containing another metal such as calcium (Ca), magnesium (Mg), chromium (Cr), copper (Cu), and vanadium (V) is used, a synergistic effect for modifying a food containing a protein can be obtained by combined use thereof with glucose oxidase.

### <Example 8> Evaluation of addition amount of iron-containing yeast

For one of the typical wheat products, noodles (Japanese wheat flour noodles served as cold noodles), as an example, the addition amount of iron-containing yeast at the time of using glucose oxidase and iron-containing yeast in combination was evaluated.

The materials were weighed in the amounts shown in Table 9, noodles were produced, and organoleptic evaluation of them was performed. The method for producing the noodles and the conditions of the organoleptic evaluation were the same as those of Example 3. The glucose oxidase and iron-containing yeast used were the same as those used in Example 3. "GO" mentioned in the table means glucose oxidase.

[Table 9]

**Table 9**

| Experimental group | #1 | #2 | #3 | #4 | #5 | #6 | #7 | #8 | |
|---|---|---|---|---|---|---|---|---|---|
| | No addition | GO | Iron-containing yeast | GO + Iron-containing yeast | GO + Iron-containing yeast | GO + Iron-containing yeast | GO + Iron-containing yeast | GO + Iron-containing yeast | |
| Semi-strong wheat flour (Suzume, Nisshin Flour Milling) | 600 | 600 | 600 | 600 | 600 | 600 | 600 | 600 | |
| Processed starch (Ajisai, Matsutani Chemical Industries) | 200 | 200 | 200 | 200 | 200 | 200 | 200 | 200 | |
| Glucose | 0.8 | 0.8 | 0.8 | 0.8 | 0.8 | 0.8 | 0.8 | 0.8 | |
| GO | - | 0.0960 | - | 0.0960 | 0.0960 | 0.0960 | 0.0960 | 0.0960 | |
| Iron-containing yeast | - | - | 0.0591 | 0.0002 | 0.0021 | 0.0591 | 0.2131 | 2.1310 | |
| Water | 328 | 328 | 328 | 328 | 328 | 328 | 328 | 328 | |
| Salt (NaCl M) | 24 | 24 | 24 | 24 | 24 | 24 | 24 | 24 | (Unit, g) |
| Undercooked feeling | 0 | 1 | 0 | 1.1 | 1.2 | 1.5 | 1.5 | 1.5 | |
| Elasticity | 0 | 1 | 0 | 1.1 | 1.2 | 1.5 | 1.5 | 1.5 | (Unit, score) |
| Result | - | - | - | Effect of combined use of yeast was slightly observed. | Effect of combined use of yeast was observed. | Effect of combined use of yeast was observed. | Effect of combined use of yeast was observed. | Effect of combined use of yeast was observed. | |

The results of the organoleptic evaluation are shown in Table 9. As seen from the results of #4 to #8, by using iron-containing yeast in various amounts in combination with glucose oxidase, there was obtained a mouthfeel (undercooked feeling and elasticity)-improving effect higher than that obtained by adding each alone. The effect of the combined use increased in an addition amount-dependent manner in up to #4 to #6, and the maximum effect was obtained in #6 to #8. Specifically, in the range of 0.00000025 to 0.0027 g of the addition amount of the iron-containing yeast per 1 g of the food raw material, the effect of the combined use was confirmed. Further, in the range of 0.000001 to 0.01 g of the addition amount of the iron-containing yeast per 1 U of the glucose oxidase, the effect of the combined use was confirmed. From the results described above, it was revealed that a synergistic effect for modifying a food containing a protein can be obtained by combined use of iron-containing yeast of various amounts with glucose oxidase.

### <Example 9> Evaluation of effect of combined use of glucose oxidase and iron salt

In order to examine whether the technique of the present invention can be applied with a metal-containing substance other than metal-containing yeast, effect of combined use of glucose oxidase and an iron salt was examined for one of the typical wheat products, noodles (Japanese wheat flour noodles served as cold noodles), as an example.

The materials were weighed in the amounts shown in Table 10, noodles were produced, and organoleptic evaluation of them was performed. When an iron salt was added, the addition amount thereof was set so that the amount of iron to be added should be the same as the amount of iron contained in the iron-containing yeast added in #3. The method for producing the noodles and the conditions of the organoleptic evaluation were the same as those of Example 3. The glucose oxidase and iron-containing yeast used were the same as those used in Example 3. "GO" mentioned in the table means glucose oxidase.

[Table 10]

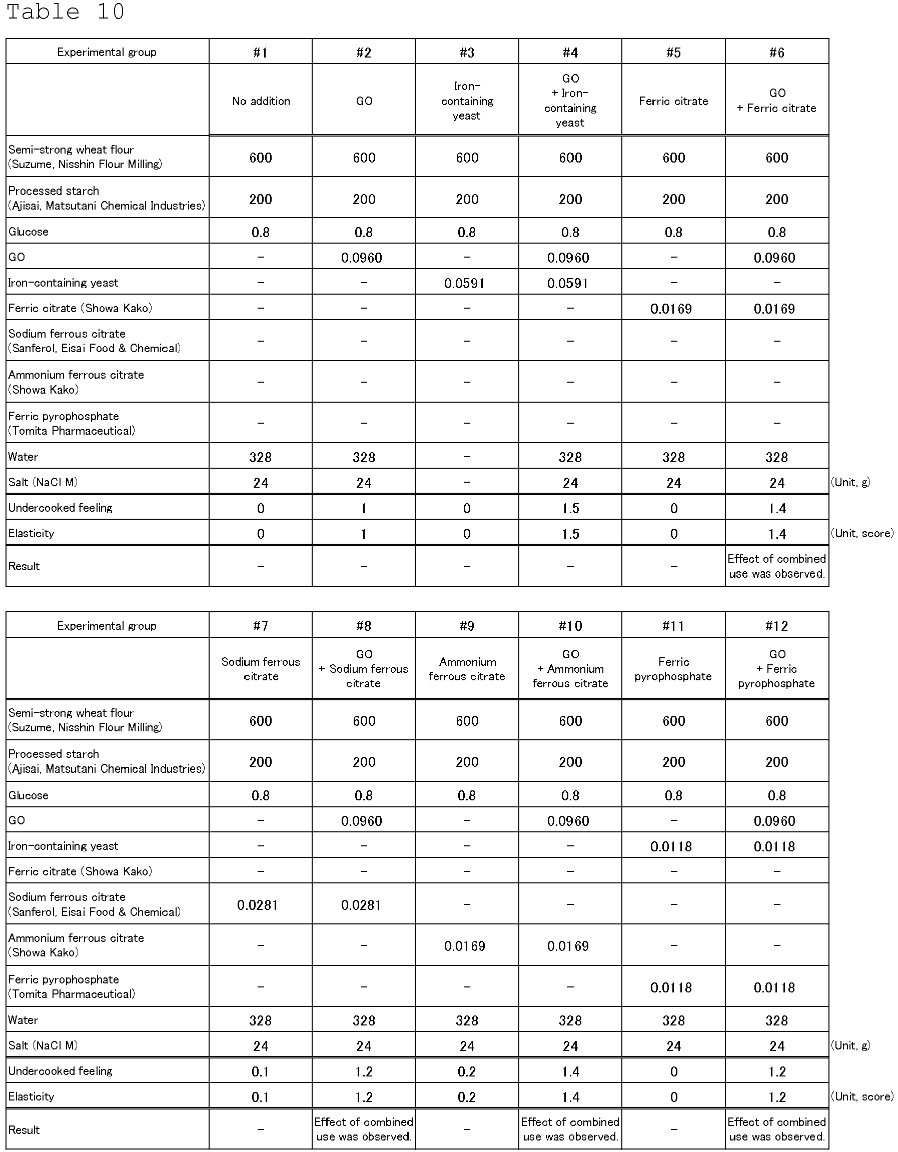

The results of the organoleptic evaluation are shown in Table 10. As seen from the results of #5 to #12, by using glucose oxidase and an iron salt in combination, there was obtained a mouthfeel (undercooked feeling and elasticity)-improving effect higher than that obtained by adding each alone. From the results described above, it was revealed that the present invention is not limited to use of metal-containing yeast, a synergistic effect for modifying a food containing a protein can also be obtained by using another metal containing substance such as iron salt in combination with an oxidoreductase.

### <Example 10> Modification of beef by combined use of glucose oxidase and iron-containing yeast

The effect of the combined use of glucose oxidase and iron-containing yeast was examined for beef as an example.

About 100 g of American beef round (defrosted beef, sliced in a thickness of 10 mm) was weighed. The meat and an enzyme solution (Table 11) were put into a plastic bag having a size of about 240 mm x 170 mm, and vacuum-packed in a state that the beef was immersed in the enzyme solution. The packed bag was left standing overnight (about 15 hours) in a refrigerator (4°C). Then, the solution was removed, the meat was weighed, and the yield after the immersion was calculated. On a griddle heated to a surface temperature of 250°C, both sides of the meat were broiled for 1.5 minutes for each side. The meat was weighed, and the yield after the broil was calculated. The meat was cut into bite-sized pieces (thickness of 1 cm and width of 2 cm), and organoleptic evaluation was performed for mouthfeel such as hardness and elasticity.

[Table 11]

**Table 11**

| (Unit: g) | | | |
|---|---|---|---|
| Experimental group | | #1 | #2 |
| | | No addition | GO + Iron-containing yeast |
| Composition of enzyme solution | Meat (original weight) | 101.0 | 104.6 |
| | Water | 30.0 | 30.0 |
| | Sumizyme PGO | - | 0.021 |
| | Iron-containing yeast | - | 0.013 |
| | C-DEX02402 (GMO-free anhydrous crystalline glucose, Cargill Japan) | 0.500 | 0.500 |
| | Organoleptic evaluation (mouthfeel) | - | More meat juice was sensed compared with #1, thus result was favorable. |
| Result | Yield after immersion (% based on original weight) | 99.4% | 99.8% |
| | Yield after broil (% based on original weight) | 64.6% | 75.1% |
| | Ratio (%) of yield after broil based on yield after broil of no addition group, which is taken as 100% | 100.0% | 116.3% |
| | Difference of ratio (%) of yield after broil from yield after broil of no addition group, which is taken as 100% | 0.0% | 16.3% |

The results are shown in Table 11. In #1 (no addition group), meat juice flowed out of the meat due to the broil, and the yield markedly reduced. In contrast, in the experimental group #2 (glucose oxidase and iron-containing yeast-combined use group), outflow of meat juice was suppressed, and the yield was improved compared with #1, as well as in the organoleptic evaluation, meat juice could be sensed, and the result was favorable. From the results described above, it was revealed that the modification effect of the combined use of glucose oxidase and iron-containing yeast can be obtained also for processed meat products.

### Industrial Applicability

According to the present invention, a higher modification effect for a food containing a protein can be obtained compared with that obtainable by using an oxidizing agent or oxidoreductase alone. That is, quality of a food containing a protein can be improved by the present invention, and hence, the present invention is extremely useful in the field of food industry.

## Claims

1. A method for producing a modified food containing a protein, the method comprising:
treating a food raw material containing a protein with an oxidoreductase, and a metal and/or a metal-containing substance,
provided that such a method wherein the oxidoreductase is a glucose oxidase, the metal and/or metal-containing substance is metal-containing yeast, and the food containing a protein is a processed aquatic food is excluded.

2. The method according to claim 1, wherein the oxidoreductase consists of one or more kinds of enzymes selected from glucose oxidase, ascorbate oxidase, and phenol oxidase.

3. The method according to claim 1 or 2, wherein the metal-containing substance is metal-containing yeast.

4. The method according to claim 3, wherein the metal-containing yeast consists of one or more kinds of yeast selected from iron-containing yeast, chromium-containing yeast, copper-containing yeast, magnesium-containing yeast, and vanadium-containing yeast.

5. The method according to claim 1 or 2, wherein the metal-containing substance is a metal salt.

6. The method according to claim 5, wherein the metal salt is an iron salt.

7. The method according to any one of claims 1 to 6, wherein the food containing a protein consists of one or more kinds of foods selected from a rice processed food, wheat processed food, egg processed food, meat processed food, and milk processed food.

8. The method according to any one of claims 1 to 7, wherein 0.0001 to 100 U of the oxidoreductase is added per 1 g of the food raw material.

9. The method according to any one of claims 3, 4, 7, and 8, wherein 0.00000025 to 0.0027 g of the metal-containing yeast in terms of dry weight is added per 1 g of the food raw material.

10. The method according to any one of claims 1 to 9, which further comprises adding a substrate of the oxidoreductase.

11. A preparation for modifying a food containing a protein, the preparation containing:
an oxidoreductase; and
a metal and/or a metal-containing substance,
provided that such a preparation wherein the oxidoreductase is a glucose oxidase, the metal and/or metal-containing substance is metal-containing yeast, and the food containing a protein is a processed aquatic food is excluded.

12. The preparation according to claim 11, wherein the oxidoreductase consists of one or more kinds of enzymes selected from glucose oxidase, ascorbate oxidase, and phenol oxidase.

13. The preparation according to claim 11 or 12, wherein the metal-containing substance is metal-containing yeast.

14. The preparation according to claim 13, wherein the metal-containing yeast consists of one or more kinds of yeast selected from iron-containing yeast, chromium-containing yeast, copper-containing yeast, magnesium-containing yeast, and vanadium-containing yeast.

15. The preparation according to claim 11 or 12, wherein the metal-containing substance is a metal salt.

16. The preparation according to claim 15, wherein the metal salt is an iron salt.

17. The preparation according to any one of claims 11 to 16, wherein the food containing a protein consists of one or more kinds of foods selected from a rice processed food, wheat processed food, egg processed food, meat processed food, and milk processed food.

18. The preparation according to any one of claims 11 to 17, which contains 0.00000005 to 0.0005 g of the metal and/or metal-containing substance in terms of metal amount per 1 U of the oxidoreductase contained in the preparation.

19. The preparation according to any one of claims 13, 14, 17, and 18, which contains 0.000001 to 0.01 g of the metal-containing yeast in terms of dry weight per 1 U of the oxidoreductase contained in the preparation.

20. The preparation according to any one of claims 11 to 19, which further contains a substrate of the oxidoreductase.
